(19)

Europäisches
Patentamt
European
Patent Office
Office européen
des brevets

(11)   **EP 1 783 921 B1**

(12)   # EUROPEAN PATENT SPECIFICATION

(45) Date of publication and mention
of the grant of the patent:
**05.12.2007  Bulletin 2007/49**

(21) Application number: **04766910.6**

(22) Date of filing: **10.08.2004**

(51) Int Cl.:
***H04B 1/40*** *(2006.01)*      ***H04B 7/04*** *(2006.01)*

(86) International application number:
**PCT/ES2004/000371**

(87) International publication number:
**WO 2006/030035 (23.03.2006 Gazette 2006/12)**

(54) **PLUG-IN ADAPTIVE ANTENNA SYSTEM AND OPERATING METHOD THEREOF**

ADAPTIVES EINSTECK-ANTENNENSYSTEM UND BETRIEBSVERFAHREN DAFÜR

SYSTEME D'ANTENNE ADAPTATIVE ENFICHABLE ET PROCEDE DE FONCTIONNEMENT ASSOCIE

(84) Designated Contracting States:
**AT BE BG CH CY CZ DE DK EE ES FI FR GB GR HU IE IT LI LU MC NL PL PT RO SE SI SK TR**

(43) Date of publication of application:
**09.05.2007  Bulletin 2007/19**

(73) Proprietor: **Antennea Technologies, S.L.**
**28108 Alcobendas Madrid (ES)**

(72) Inventors:
• **DE HARO ARIET, Leandro**
  **E-28004 Madrid (ES)**
• **GARCIA GARCIA, Laura**
  **E-28931 Mostoles (Madrid) (ES)**
• **MARTINEZ OLLERO, Alberto**
  **E-28002 Madrid (ES)**
• **GARCIA-MADRID VELAZQUEZ, Francisco, Javier**
  **E-13250 Daimiel (Ciudad Real) (ES)**
• **GOMEZ CALERO, Carlos**
  **E-28916 Leganes (Madrid) (ES)**

• **PALAU MONTAVA, Clara**
  **E-28109 Alcobendas (Madrid) (ES)**
• **CALVO RAMON, Miguel**
  **E-28040 Madrid (ES)**
• **SIERRA PEREZ, Manuel**
  **E-28015 Madrid (ES)**
• **MARTINEZ RODRIGUEZ-OSORIO, Ramon**
  **E-28017 Madrid (ES)**
• **SANMARTIN JARA, Juan**
  **E-28017 Madrid (ES)**
• **ROLDAN CASTILLO, Miguel**
  **E-28700 San Sebastian de Los Reyes (Madrid) (ES)**

(74) Representative: **Carpintero Lopez, Francisco et al Herrero & Asociados, S.L.**
**Alcalá 35**
**28014 Madrid (ES)**

(56) References cited:
**EP-A1- 1 387 501        WO-A1-00/51376**
**WO-A1-01/91323        WO-A2-00/35116**
**ES-A1- 2 192 970        US-B1- 6 317 586**

## Description

### Object of the Invention

The present invention is included in the field of telecommunications, particularly within the field of smart antennas and more particularly in adaptive antennas. It is preferably applied to third generation UMTS (Universal Mobile Telecommunications System) technology for mobile telephony.

The object of the invention relates to an adaptive smart antenna system and its operation method, allowing the adaptive antenna to be plugged in (plug & play), i.e., compatible with any base station, independently of the technology used by the operators of the different standards for wireless communications (UMTS, GSM, etc.) and transparent to the base station manufactured according to such standard technologies (Node B for UMTS, BTS for GSM, etc.).

Another object of the invention is that the operation method for said plug-in adaptive antenna, apart from maintaining the compatibility of the antenna with any base station (for example, Node B of UMTS), can determine the directions of arrival and locate the users of the mobile terminals, improving the properties of directivity and correction in the direction of the signal for each user of said adaptive antenna.

### Background of the Invention

Due to the constantly growing number of users in mobile telecommunications systems and the increasingly greater bandwidth demanded by multimedia services, a spectacular increase in the traffic supported by mobile telephony networks is occurring, making a parallel increase in their capacity necessary.

However, on the other hand, citizens are increasingly worried about the supposed risks of human exposure to the electromagnetic fields generated by the base stations used for the communication between mobile telephones, making it very difficult for operators to deploy new base stations. The need to reduce deployment costs due to the high investments required for infrastructure and licenses is added to this fact.

Smart antennas are a very interesting option within the field of mobile communications as a possible solution to the aforementioned drawbacks.

The term smart antenna includes several types of antennas, from switched beam antennas to adaptive antennas.

There is currently a great interest in the study and development of adaptive antennas for mobile telecommunications, especially focused on Third Generation mobile communications systems (UMTS and subsequent third generation services) due to the benefits that this type of antennas can provide, such as the improvement in the signal-to-interference ratio, and therefore the increase in the capacity of the system, thus increasing the number of users allowed in the system, the increase in the scope or reduction of the emitted power and the optimization in the coverage deployment.

The Universal Mobile Telecommunications Services (UMTS) are based on the Wideband Code Division Multiple Access (W-CDMA) technique, achieving an efficient use of the spectrum for a large number of users. But the capacity of these systems is limited by the co-channel interference due to multiple access of users/subscribers. In order to offer high binary rate services to a large number of subscribers, the operators of base stations must be provided with systems in which said co-channel interference is reduced.

The smart antennas in the locations of the base stations are the best alternative for operating companies if a reassignment of new frequency bands for preventing interferences is not desired, or being obliged to have a larger number of base stations if the co-channel interference decreases by reducing the size of the cells of the mobile communications system. With this type of antennas, the system is able to distinguish the users according to their angular position.

Within the class of smart antennas, the switched beam antennas or multiple beam antennas have a fixed set of beams for each sector with static radiation diagrams, such that a mobile is connected to a specific beam according to an optimization criterion, according to the greatest signal power received, the best signal-to-interference ratio, etc.

The other type of smart antennas, the adaptive antennas, have better features as regards the fact that the discrimination between users is achieved by means of the dynamic configuration of a personalized radiation pattern for each user according to the environment, i.e. according to the set of signals arriving in the array of antennas. Their operation is based on obtaining a reference signal from which weights are determined, which weights are applied in the suitable shaping of the beam for each user, distinguishing them in a univocal manner.

In mobile telecommunications systems based on W-CDMA, the users are distinguished by univocally assigning a scrambling code to each of them. Additionally, pilot bits of the control channels in the uplinks (from the user mobile to a base station) and downlinks (from the base station towards the user) are used for the generation of the required reference signal.

An error signal due to noise and interferences occurs from the mentioned reference signal necessary for defining the weight vector whereby the beam is shaped, the power of which error signal must be minimized by means of an adaptive processing for the purpose of reducing the power of the interfering signals, creating radiation nulls in the suitable directions.

Therefore, adaptive antenna systems require an adaptive processed subsystem, as well as an operation method for achieving the shaping of the beams for each user, in the receiver of the base station.

The adaptive antennas known to date have their operation method integrated in the base station itself, which method may include the processes for the synchronism, modulation/demodulation and adaptive processing of the beam. Therefore, they depend on the manufacturer of said base station.

It would be preferable for the adaptive antenna to be plugged into any base station, i.e., compatible with the remaining equipments of the base station (Node B in UMTS terminology, BTS for the Global System for Mobile Communications GSM, etc.). In order for an adaptive antenna to be made compatible (plugged) with any standard type of base station, a system and the operation method must be designed, including the adaptation and shaping of the beam such that the processes are carried out in a transparent manner for the base station of the operator. Document ES 2 192 970 discloses a smart antenna compatible with the equipments of a multistandard base station.

**Description of the Invention**

The invention is defined by the features of independent claims 1 and 11.

In order to solve the problems set forth previously, the proposed invention relates to an operation method for a plug-in adaptive antenna comprising a beam shape adapted to the users, the signals of which are received and transmitted through an antenna array in the uplink and downlink respectively, characterized in that in uplink beamforming, the signals received in such antenna array are multiplied by forming weights that are common to all the users and the resulting signals are added to produce a single compatible signal to be transmitted in the uplink to the base station.

Said base station can correspond to any radio communications standard (GSM, UMTS,...), corresponding being a BTS, a Node B, etc.

The plug-in feature relates to the possibility of connecting said adaptive antenna in radiofrequency to a standard base station.

The method and the system of the invention are set forth as two independent (software/hardware) block sets controlling each of the polarizations of the antenna array. Each block set establishes its own adaptive processes (weight calculation in uplink and downlink, capture and initialization of parameters in the downlink,...), the resulting signals passing to the conventional base station after remodulating the signals from the different users with their mobile terminals connected to said base station. The transmission diversity can be used in the same manner, achieving a strong reduction in the total number of variables to be processed simultaneously, but conserving the same control capacity.

Considering a single polarization in the antenna array, in the preferable case of using UMTS technology, the operation method for the plug-in adaptive antenna of the invention comprises the following processes (which would be doubled if the two polarizations of the antenna array are considered as a whole):

A) In the uplink (from the mobile terminal to the base station):

A.1) Chip Timing: Coarse Timing and Fine Timing.
It is responsible for carrying out the timing of the signal received at the input, such that the subsequent processes can receive the signal synchronised with the (scrambling) code assigned to the user for the subsequent demodulation. It is carried out at the level of the chips of the spread signal, i.e. once its data bits are multiplied by the (spreading) code of the user.
Chip timing consists of two steps: an acquisition or coarse synchronization step, the function of which is to make the received signal and the code demodulating it have a small relative phase difference (phase difference of a chip); followed by a tracking or fine timing step to achieve a more precise alignment and save the synchronization during the entire reception of the signal.

A.2) Frame Timing
The frame (slot) timing extracts from the of the slot assigned to the user in the W-CDMA frame, made up of header bits, control bits and data bits, the real and imaginary parts of the pilot bits contained in the control channel (DPCCH for W-CDMA).

A.3) Demodulation
It must be responsible for the modulation and demodulation of the signal of each user. The demodulation consists of the descrambling and despreading of the signal, the necessary bits of the user being extracted. Essentially only the demodulation of the control channel of each desired user is required, since it is said channel that is applied to carry out the subsequent weight calculation and signal shaping with them, and it is also used in the previous timing. The control channel with the pilot bits of the signal of each user is therefore demodulated.

A.4) Phase Correction

Tracking of the phase compensation in the sampling frequencies between the radio frequency part and the digital processing part.

A.5) Weight Calculation

Obtaining the weights for each of the users which must be applied to the signals reaching the adaptive antenna (array of radiating elements) to achieve improvements such as the increase in the signal to interference ratio, gain maximization, etc. The final calculation of the weights for the element array pattern results from a weighted average of the individually resulting weights for each user.

A.6) Beamforming

It forms the beam of the received signal in the uplink. All the physical channels, both dedicated and common channels, are received through the adaptive antenna, none through the omnidirectional antenna, since the pattern obtained when the desired signal power to interference ratio is quasi-omnidirectional, insofar as it works with few desired users, therefore directions of arrival are barely lost.

A.7) Estimation of the user signal directions of arrival

Besides forming the beam of the received signal with the weights calculated in the uplink, it estimates the angle determined by the directions of arrival of the signals received from each mobile terminal of the users.

A.8) Location of the users

It combines the angular information estimated in the previous process with a time reference to estimate the user location in the cell serviced by the base station, with which it communicates through the adaptive antenna.

B) In the downlink (from the base station to the mobile terminal):

Once the channels from the base station are treated by a radio frequency module or subsystem comprised in the modular smart antenna, they are separated in two groups: common and dedicated channels.

Unlike in the uplink, in this wireless communication direction, it is of interest that the common channels are transmitted omnidirectionally given that the timing channel, which requires this feature, is located between them.

Therefore, no processing operation is carried out on the common channels and they are added in the final step (radio frequency module) in an antenna, so that they are thus transmitted omnidirectionally to the entire cell.

The dedicated channels of the signal, received from the base station to be transmitted to the mobile terminals of the users, are the only channels subjected to the adaptive processing of the operation method. To that end, channels and users are demodulated, the weights are calculated for the downlink from the uplink weights, finally being applied on the signals of each user transmitted with the power given by the base station.

The processes for the downlink are symmetrical to those of the uplink, being executed in a transparent manner to the base station, as follows:

B.1) Frame Timing

It basically has the tasks of finding the primary scrambling code belonging to the cell in which the mobile is located and the initial timing, essential for the channel and demodulation estimate of the dedicated channels of the users to be configured.

B.2) Chip Timing: Coarse Timing and Fine Timing

These are carried out in a manner similar to in the uplink, with the exception that it is carried out on the PCPICH instead of the DPCCH signaling channel.

B.3) User Parameter Initialization

It incorporates parameters typical of each of the users, essential for providing the adaptive antenna with the ability of being plugged into the base station of any third generation telephony operator, without needing to establish a new communication link with said base station.

B.4) Radio Bearer Parameter Capture

For the same reason given above, based on the information corresponding to the Radio Bearer call setup, Radio Bearer reconfiguration or Radio Bearer release processes generated by the base station, processes for identifying the scrambling, spreading-despreading codes, etc., corresponding to the configured users are included. Furthermore, according to the type of process (set-up, reconfiguration or release), a different action is carried out (code capture, update and release, respectively).

B.5) Transfer of user codes to the uplink

B.6) Transfer of user codes for the downlink

B.7) Demodulation
Both the control and data signal are demodulated, the dedicated channels DPCCH and DPDCH being extracted.

B.8) Modulation
The signal of each user is multiplied by its spreading code.

B.9) Power Balancing
It keeps the level of relative power between each of the received channels constant according to the emission power from the base station, such that the previous processes and the adaptation process of the beam remain transparent with respect to said base station.

B.10) Weight Calculation
The weights are independently applied in the downlink, but they are calculated from the individual weights obtained in the uplink for each of the users. There is a phase ratio between the final weights (with a real and imaginary part) resulting in the uplink and the downlink which must be conserved in both links.

B.11) Beamforming
It forms the beam of the signal to be transmitted in the downlink.

B.12) Treatment of the Common Channels
Since the common channels do not go through the adaptive processing of the operation method, they must be included in the final signal to transmit omnidirectionally to all the users of the cell corresponding to the base station connected in radio frequency to the adaptive antenna.

B.13) Temporal Process Compensation
It corrects the delay caused by the digital processing, compensating the temporal delay information established by the base station and extracted from the Radio Bearer parameters.

Another aspect of the invention relates to a plug-in adaptive antenna system, comprising an antenna array to receive and transmit the signals of the users, corresponding radio frequency modules for transmitting and receiving the uplink as well as for transmitting and receiving the downlink, characterized in that it comprises means for calculating weights both in the uplink and downlink, generating forming weights common to all users, to be multiplied to the signals received in the antenna array and these are added up by means of a beamforming module, producing a single signal compatible for transmitting to the base station.

The plug-in adaptive antenna system comprises the following general blocks which are implemented in digital processors (DSPs, FPGAs, ASICs, etc.):

- Timing Subsystem
- Modulation-Demodulation (MODEM) Subsystem
- Adaptive Processing Subsystem

Said system of the invention is applicable in any standard radio technology (GSM, UMTS, etc.), adapting the implementation of such subsystems to the specific technology used.

Considering what was discussed in the background section, the method of the invention has the object not only of being operative in a smart antenna, as an adaptive antenna, but it can also be shared by different operators connecting it to their base stations, independently of the technology standard (UMTS, GSM, etc.) that is followed. Taking into consideration that most base stations are designed with a capacity of polarization diversity in receiving and transmitting, this feature is used to design a double system and operation method for an adaptive smart antenna.

In relation to the processes of the operation method for which the smart antenna is adaptive and furthermore compatible with any standard base station (in particularly UMTS Node B), the weight calculation is done individually for each user, both in the uplink and downlink, but the final weights with which the beam is formed in the uplink must be common for the adaptive antenna to be plugged into a Node B. This is achieved as a result of the aggregate weight calculation method, including the operation method of the invention in the uplink, weighting the power that is received from each user such that the signal from the mobile terminals farthest away and averaging all the weights thus obtained for all the users.

To obtain the final reference signal that the beam is formed with, the time-reference based techniques are the techniques that best adapt to wireless communications, and particularly to UMTS systems. The structure of control channels (DPCCH) favors the possibility of generating a time reference by means of the pilot bits included in said channel, which bits can furthermore be used to perform a channel estimate if necessary.

The use of an array of radiating elements as an antenna allows obtaining a radiation pattern adapted to each situation by means of selecting the suitable weights. The signal received by the antennas is multiplied by the forming weights. A signal is obtained at the output in which the power of certain arrival angles (the maximum angles of the radiation pattern) and others are cancelled (null and void in the radiation pattern). Ideally an independent pattern can be obtained for each user, associating different weights to each one, and as many simultaneous independent patterns as there are users. By applying the suitable weights to the beam of each user, the radiation pattern maximizes the power in the direction of the desired user and minimizes the directions in which interferences appear, thus maximizing the desired signal to interference ratio.

The adaptive antenna comprising the array of radiating elements and the system object of the invention is located between the operator base station and the terminal equipment of mobile users, therefore replacing the place currently occupied by the conventional antennas and being compatible with any standard base station, such as a UMTS Node B.

## DESCRIPTION OF THE DRAWINGS

To complement the description being made and for the purpose of aiding to better understand the features of the invention according to a preferred practical embodiment thereof, a set of drawings is attached as an integral part of said description in which the following has been shown with an illustrative and non-limiting character:

Figure 1 shows the overall block scheme of the operation method and which constitute the modular architecture of the plug-in adaptive antenna system that can be plugged in with a base station, preferably a Node B, comprising a (four) antenna array subsystem, the radio frequency subsystem in the uplink and downlink, with the corresponding analog-to-digital and digital-to-analog conversion modules, including the digital processing subsystem carried out according to the object of the invention and considering a single polarization of said antenna array.

Figure 2 shows a general pattern of the main modules of the plug-in adaptive antenna system in the uplink, showing the antenna array subsystem, the radio frequency subsystems and the adaptive processing subsystem.

Figure 3 shows a general pattern of the main modules of the plug-in adaptive antenna system in the downlink, showing the antenna array subsystem, the radio frequency subsystems and the adaptive processing subsystem.

Figure 4 shows a detailed scheme of the operations executed in the uplink demodulation process.

Figure 5 shows a detailed scheme of the operations executed in the downlink demodulation process.

Figure 6 shows a detailed scheme of the operations executed in the modulation process for the downlink.

Figure 7 shows the assembly of the hardware components forming the plug-in adaptive antenna system of the invention.

## PREFERRED EMBODIMENT OF THE INVENTION

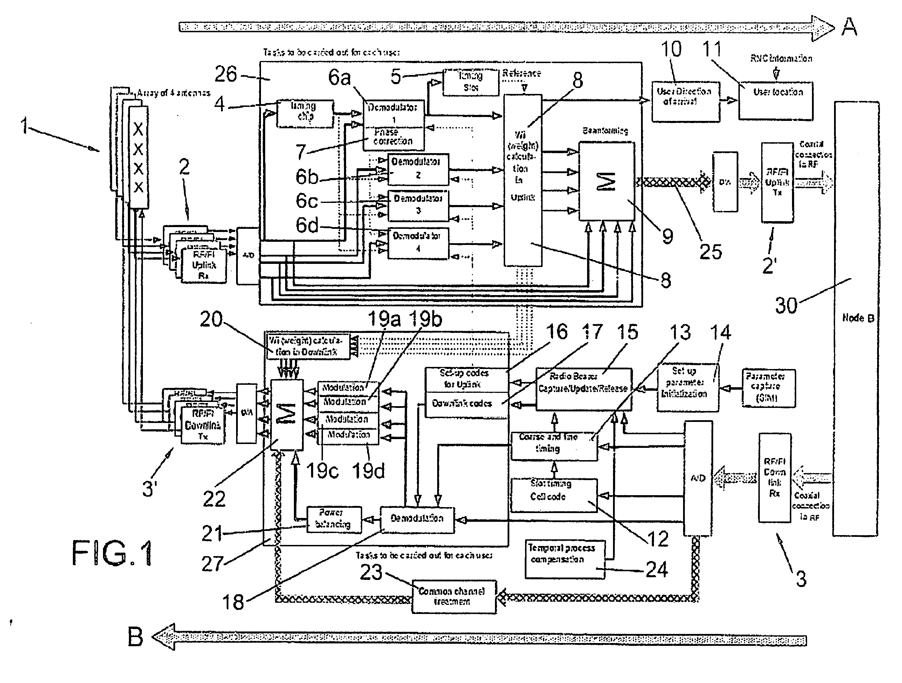

As shown in Figure 1, where the dotted arrows indicate the passage of the signal through the different modules described forming the operation method can be described as one of the possible embodiments of said method for a plug-in adaptive antenna that can be plugged into a base station (30), which is a Node B in the UMTS operators environment, which is herein described as a series of processes, both for the uplink (A) and the downlink (B), executed as indicated by the signal input and output arrows to said processes in Figure 1.

An embodiment of the plug-in adaptive antenna system comprises an antenna array (1), corresponding radio frequency subsystems for transmitting (2) and receiving (2') the uplink (A) as well as for transmitting (3) and receiving (3') the downlink (B), with the respective analog-to-digital (A/D) and digital-to-analog (D/A) converters, and a series of modules in correspondence with the processes of the method of the invention.

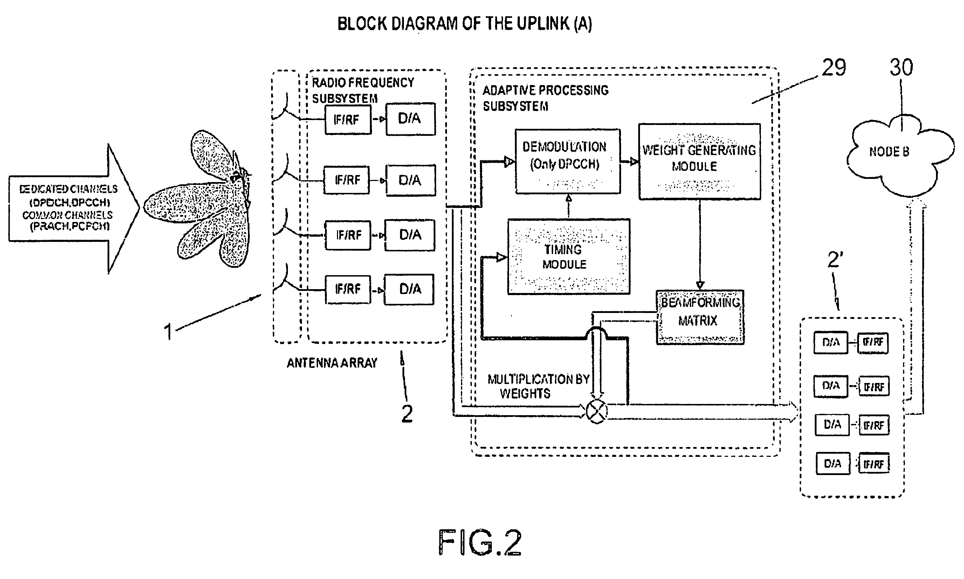

Said processes for the uplink (A), shown separately in Figure 2, where the radio frequency subsystem (2, 2') and adaptive processing subsystem (29) are shown next to the antenna array (1) constituting the plug-in adaptive antenna system for said uplink (A):

• Chip Timing in the uplink (4):

Once the signal is received and after the radio frequency receiver subsystem (2) only the control channel (DPCCH) of each user is demodulated to obtain the pilot bits, which are the bits that will be used in the beamforming of the antenna. To demodulate it is necessary the alignment of the received signal with the scrambling code: this process is also responsible for doing this, using the signal of an element of the antenna array (1) as the received signal.

Chip timing (4) can be broken down into two steps: acquisition and tracking. Figure 1 only depicts its representation for the signal from a single polarization of a single radiating element of the antenna array (1) and the same for the subsequent frame timing (5) in the uplink (A).

The main objective of the acquisition step (coarse timing) is to obtain a phase difference of a chip between the receptor and the received signal. To that end, the properties of the used codes are used since their autocorrelation function is not null in the instant when the received signal and the code are perfectly synchronised. To that end a serial search is performed, correlating the received signal with the scrambling code, know by the receiver by means of the capture/update/release process of Radio Bearer (15) parameters in the downlink (B). These correlations are compared with a threshold value which is the value that will decide if the signal and the code are synchronised.

After the acquisition step, the tracking step (fine timing) takes place, which allows a fine and continuous alignment (chip portion phase difference) of the locally generated code with the received signal. The code generator generates two sequences, an early sequence and a late sequence. These two sequences are introduced in a phase detector from which an error signal is obtained which is useful for controlling the code with which it is being correlated. The error signal is useful as input to a filter the response of which softens the input signal. The filter output signal is used for controlling the code.

• Frame Timing in the uplink (5):

After the chip timing step (4), the frame timing step (5) takes place, in which the pilot bits (real and imaginary part) emitted in the signal are extracted from the frame (made up of header bits, control bits and data bits) of the time slot assigned to the user in the W-CDMA access for the recovery of the control channel.

• Demodulation in the uplink (6a):

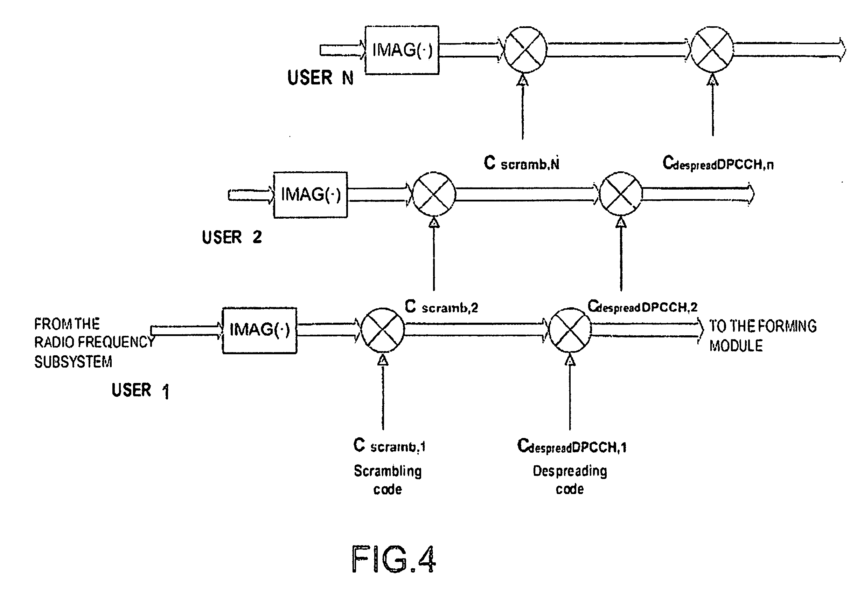

For an antenna array (1) formed by four elements, as shown in Figure 1, this process is carried out for each signal received by said four elements, giving rise to respective equivalent demodulation modules (6a, 6b, 6c, 6d) which are executed in parallel. The execution scheme of each of said modules is shown in Figure 4, where it can be seen how the imaginary part (IMAG) of the signal of each user from the radio frequency subsystem is multiplied by the spreading and despreading codes.

The demodulation in the uplink (6a) is carried out on the control channel (DPCCH) and consists of the descrambling and despreading of the signal, such that the necessary bits are obtained for the user. Essentially, only the control channel of each desired user is demodulated since it is this channel that is used to carry out the weight calculation (8) and beamforming (9), as well as being used for chip timing (4) and frame timing (5).

• Phase Correction (7):

It is corrected with a mean phase calculated with a sufficient number of bits, preferably 150 bits, of the previous frame rather than performing a correction with the phase of the received instantaneous bit.

The received signal is the composition of the signal of the user and of the interfering signal, each of them having a carrier frequency different from the tuning frequency of the receiver system. These frequency differences cause an approximately linear phase variation complicating the synchronization tracking, therefore it is necessary to cancel the frequency corresponding only to the signal of the user. The latter is obtained from increasing the phase of the received signal when it is averaged throughout a time slot, which is the duration of a W-CDMA frame (10 msec), such that once this integration time has concluded it is applied to the following received symbols.

With this phase correction process (7) the phase of the desired user is averaged to cancel the mean phase variation connected to said desired user. The idea is that which comes from the following formula, where the phase of the total signal ($\theta_{tot}$), sum of the phase of the signal of the desired user ($\theta_{des}$) and the phase of the interfering signal ($\theta_{int}$), is expressed according to the angular velocity of propagation (w) of the signal and of the temporal sample (n), so as to carry out the average on the total number of users (N):

$$\theta_{tot} = w \cdot n$$

$$\theta_{des} + \theta_{int} = w \cdot n$$

$$\frac{1}{N}\sum_{N}(\theta_{des} + \theta_{int}) \approx \frac{1}{N}\sum_{N}(\theta_{des}) = \frac{1}{N}w\sum n$$

The phase of the desired user ($\theta_{des}$) is estimated by finding the mean instantaneous phases since the mean phases of the interfering user ($\theta_{int}$) will tend to be null.

• Weight calculation in the uplink (8):

The function of this process is to calculate the weights for the adaptive antenna by means of an aggregate (weighted) weight method described below, which is based on known algorithms (LMS: Least Mean Squares, RLS: Recursive Least Squares or others).

The weights must be calculated both for the uplink (A) and for the downlink (B). Generally, one set of weights is used for the uplink (A) and another set of weights is used for the downlink (B), since the frequencies used in each of them are different.

Nevertheless, it has been verified that the error which is committed is small if the same set of weights that was calculated in the uplink (A) for a specific user is used in the downlink (B), therefore the same set of weights per user can be used for both the uplink (A) and downlink (B) in wireless communication systems with adaptive antennas which need to optimize their velocity to the detriment of quality.

The signal which must be sent to the base station (30) must be a single radio frequency signal. In the ideal case of an integrated system, embedded in Node B, when the adaptive antenna system works configuring several users, each of them would be configured separately, calculating independent weights for each of them and multiplying the signal obtained from the elements of the antenna array (1) by said weights, obtaining one signal for each user who desired to be received and shaped. In a plug-in adaptive antenna, the connection to the base station is a radio frequency connection, so this is not possible and it is necessary to combine the weights obtained in some way, such that all the desired users are configured as a whole and the common interfering signals are rejected.

This is obtained as a result of the aggregate weight method which, after demodulation (6a, 6b, 6c, 6d) of each user separately, obtaining the control bits corresponding to each user, uses said bits together with the reference bits of each user known a priori, such that the calculation is carried out individually for each user.

As many sets of weights as users desired to be shaped are thus produced. All the weights obtained for all the users ($w_{ji}$) are averaged (where j=1 up to the number of elements of the antenna array (1), in this case, there are four elements; i=1 up to N: number of users), considering the power received from each user ($P_{ji}$), such that the signal of the users far away are further strengthened, multiplying them by a factor ($\alpha_{ji}$) which depends on the inverse of the power of the signal of each user received by each element of the antenna array (1), as indicated in the following formula:

$$w_{total,1} = \sum_{i=1}^{N}\alpha_{1,i} \cdot w_{1,i}, \quad \alpha_{1,i} \propto \frac{1}{P_{1,i}}$$

$$w_{total,1} = \sum_{i=1}^{N}\alpha_{1,i} \cdot w_{1,i}, \quad \alpha_{1,i} \propto \frac{1}{P_{1,i}}$$

$$w_{total,1} = \sum_{i=1}^{N} \alpha_{1,i} \cdot w_{1,i}, \quad \alpha_{1,i} \propto \frac{1}{P_{1,i}}$$

$$w_{total,4} = \sum_{i=1}^{N} \alpha_{4,i} \cdot w_{41,i}, \quad \alpha_{4,i} \propto \frac{1}{P_{4,i}}$$

Common forming weights ($w_{total,1}$,...,$w_{total,4}$) are thus obtained, which weights correspond with a pattern which strengthens the users far away and rejects the common interferences (users of other near-by cells, non-user type interferences,...), favoring the directions of arrival of the desired users.

Then the signal of the antenna array (1), multiplied by said common forming weights ($w_{total,1}$,..., $w_{total,4}$) is summed to give rise to a single output flow or signal (25), since the base station (30) which must be compatible with the adaptive antenna only has one signal data input.

• Uplink Beamforming (9):

This process must obtain from the calculated weights in the previous process and of the signal provided by the adaptive antenna a single output signal (25) which will be sent to the base station (30), multiplying the signal of the users by the weights obtained in the weight calculation (8), which will be shaped by means of the use of the adaptive antenna, showing an improved radiation pattern with respect to the signal which would be received with a single typical omnidirectional or conventional sectored antenna.

Once the beam is shaped, the signal passes through the radio frequency module or subsystem again to transmit (2') in the uplink (A), all the channels being sent to the base station (30).

Up to this point, all the processes described in the uplink (A) are executed for each of the (N) users, as seen in box (26).

In contrast, the two process described below are carried out only once for all the users.

Both processes, the estimation user signal directions of arrival (10) and user location (11), are included at the end to refine the working of the adaptive antenna, when obtaining angular directions and temporal positions of the users determining an estimated location of the desired users.

• Estimation of User Signal Directions of Arrival (10):

This process estimates the directions of the angles of arrival, by means of angular spectrum estimation techniques, obtained from the received signal, which is mathematically understood as the dimension of the signal domain. Once this dimension is known, the MDL (Minimum Description Length) criterion, selected from the angular spectrum estimation techniques (MUSIC, ESPRIT, etc.), is preferably applied to determine the real number of directions of the angle of arrival. For example, the MUSIC (Multiple Signal Classification) technique, which is based on the analysis by correlation matrix diagonalization, provides information on the number of signals arriving at the antenna with levels that are above the noise level.

The estimation process of the user signal directions of arrival (10), together with the immediately following user location (11), is added to the adaptation by means of the weight calculation (8) and beamforming (9) to further optimize the radiation pattern of the adaptive antenna, achieving greater directivity and correction in the direction of the signal for each desired user.

• User location (11):

This process provides an estimation of the user location by combining the angular information, which is stored with a time reference, with the information of the air time from the control station (RNC), which manages all the base stations. This information is provided by the control station, storing it in externally accessible files.

Together with the estimation of user signal directions of arrival (10), the user location process (11) even further adjust the signal radiated by each of the elements of the antenna array (1) forming the adaptive antenna, for all users.

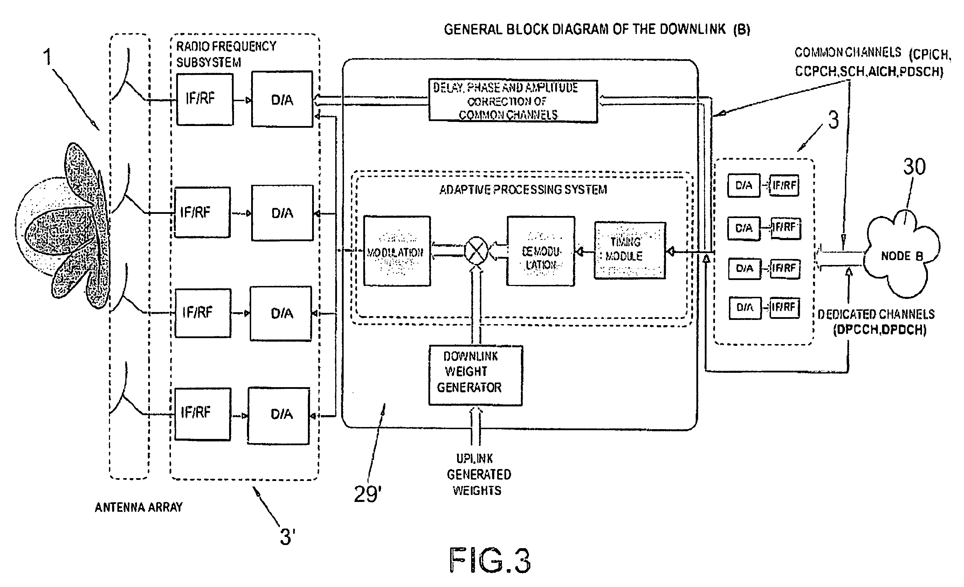

In the downlink (B), shown separately in Figure 3, where the radio frequency subsystem (3, 3') and adaptive processing subsystem (29') are shown next to the antenna array (1) constituting the plug-in adaptive antenna system for said downlink (B), the preferred embodiment of the method of the invention comprises the following processes:

• Frame Timing in the Downlink (12):

Its main task is to find the primary scrambling code number of the cell, based on the monitoring of three basic signaling channels: P-SCH, S-SCH and P-CPICH. SCH (Synchronization Channel) channels are only transmitting, overlapping, in the first 256 chips of each frame time slot in the downlink (B). While the P-SCH (Primary Synchronization Channel) channel consists of receiving a single code of 256 chips slot to slot, the S-SCH (Secondary Synchronization Channel) changes the code in each slot following a combination of 16 possible known codes. Knowing this combination facilitates the task of finding the primary scrambling code number of the cell, which will be done last with the P-CPICH (Primary Common Pilot Channel) signaling channel, which can physically be considered a dedicated user channel which the expansion or spreading code (256.0) has been applied to.

Frame timing in the downlink (12) consists of the following phases:

✔ Phase 0: Buffer filling. Its only objective is to store a sufficient number of input signal samples in the internal memory of the timing subsystem within the plug-in adaptive antenna system so as to initiate the digital processing.

✔ Phase 1: Frame timing search. It is necessary to find the code timing of the SCH channels to later find the combination of S-SCH codes. By correlating with the only possible code of the P-SCH channel, the preliminary temporal alignment needed is found. The correlation value obtained with the P-SCH will furthermore be useful as a reference for the correlation with the S-SCH and the P-CPICH.

✔ Phase 2: Frame timing search. Once the temporal alignment of the SCH channels has been found, the search for the S-SCH combination can be dealt with. There are 64 possible combinations of S-SCH codes; once the combination is known the beginning of the frame of the P-CPICH channel is known at the same time that the cell scrambling code group is known. Every group consists of 8 possible codes, therefore the time needed to find the definitive primary scrambling code is considerably reduced as the 512 scrambling codes do not have to be checked without knowing a priori the frame timing.

✔ Phase 3: Frame sampling. Ideally, the correlation of the 8 possible cell codes of the group found with the P-CPICH would be sufficient to known the final cell code. Therefore, a number of samples equivalent to a frame, at a sample rate per chip, is stored in the memory of the timing subsystem to later block real-time operation and to finally generate the 8 possible codes to be tested.

✔ Phase 4: Cell code search. With the real-time operation blocked, the 8 possible, one sample per chip, codes are generated and checked, correlating with the P-CPICH channel. Once the real code number is found, it is sent to the demodulation process (18) so that the latter can generate the final code and in turn forward the number to the modulation processes (19a, 19b, 19c, 19d), where it is also required.

✔ Phase 5: Final code generation. The final primary scrambling code is generated with 4 samples per chip and filtered (root-raised cosine filter).

✔ Phase 6: Receiver timing. The signal is sent in order to synchronously initiate the receivers.

✔ Phases 7 and 8: Wait phase to ensure the correct reinitialization of the receivers.

✔ Phase 9: New buffer filling. The sufficient number of samples are again stored in the memory to recommence processing.

✔ Phase 10: New frame timing search. Once the primary cell scrambling code is generated, the direct path would consist of using the first 256 chips thereof to correlate with the P-CPICH and thus find the timing frame again, but the elevated time needed for engagement (the 10 ms which pass between beginnings of frame) makes it necessary to search for an alternative mechanism: The P-SCH codes appear 15 times per frame (each beginning of the time slot), therefore it is much faster to first find the frame timing again correlating with the P-SCH code, and once this is done, checking the following beginnings of the slot with the temporal beginning of the primary cell scrambling code until finding the beginning of frame. In summary, the frame timing is searched for again in this step by searching for the P-SCH channel.

✔ Phase 11: Frame timing. As previously mentioned, it is checked slot to slot until finding the beginning of the P-CPICH frame.

✔ Phase 12: Tracking through frame. To obtain a better code alignment for the subsequent demodulation, a complete frame (10 ms) is passed, carrying out timing tracking tasks. In the last frame time (the last 256 chips), the signal for enabling operation of the demodulation process (18) is sent, being received with a delay of another frame time, i.e. it will be received right at the beginning of the following frame. This enabling signal simply consists of the first timing information transfer (alignment time in samples and constellation rotation information, which is simply a complex number).

✔ Phase 13: General operating step. The normal operation of the timing begins in this phase, the initialization step thereof having concluded. Then the temporal code alignment (timing tracking) and signal constellation rotation are estimated, correlating with the P-CPICH channel. This obtained information is sent every 1/15 ms to the demodulation process (18).

• Chip Timing in the Downlink (13):

This is applied to one of the users, since the remaining users are synchronous with the latter, on the PCPICH channel. As in the uplink (A), acquisition (coarse timing) and tracking (fine timing) steps are carried out but here they are carried out on the PCPICH channel instead of the DPCCH channel. The coarse timing (chip) is first searched and the timing (chip portion) continues to be refined in the tracking step.

• User Parameter Initialization (14):

To provide the adaptive antenna with the (plug & play) capacity of being able to be connected by radio frequency to a standard base station (Node B) of any mobile telephony operator (of UMTS) without needing to set up any new communication link with the base station (30), it is essential to know the features of each of the new users allowed in said base station (30), through their user scrambling and spreading codes and time delay.

This information is transmitted in the downlink in the Radio Bearer Setup, Radio Bearer Release and Radio Bearer Reconfiguration messages in the FACH and FACH2 carrier channels with encoding features depending on if speech or data services are transmitted. It is demodulated and decoded to the RRC (Radio Resource Control) level to read the features of the new users accepted by the base station (30).

• Radio Bearer Parameter Capture/Update/Release (15):

The broadcasting channel, i.e. the physical S-CCPCH channel and logic FACH/FACH2 channel, is demodulated, which has a known code from which the bits are extracted (demodulated) from the Radio Bearer Setup, Radio Bearer Reconfiguration and Radio Bearer Release fields, among many other bits, the scrambling, spreading-despreading,..., to then carry out the respective assignment, update and release thereof.

• Transfer of user codes to the uplink (16):

It sends the scrambling codes for each user to the demodulation process (6a, 6b, 6c, 6d) of the uplink (A), for each respective radiating element of the antenna array (1).

• Transfer of user codes to the downlink (17):

It sends both the scrambling codes and the delay time for each user to the demodulation process (18) of the downlink (B).

These two processes as well as the following processes comprised in box (27) are carried out for each user and they all act only on the dedicated channels, treating the common channels separately, as will subsequently be explained and distinguished in Figure 3

• Demodulation in the Downlink (18):

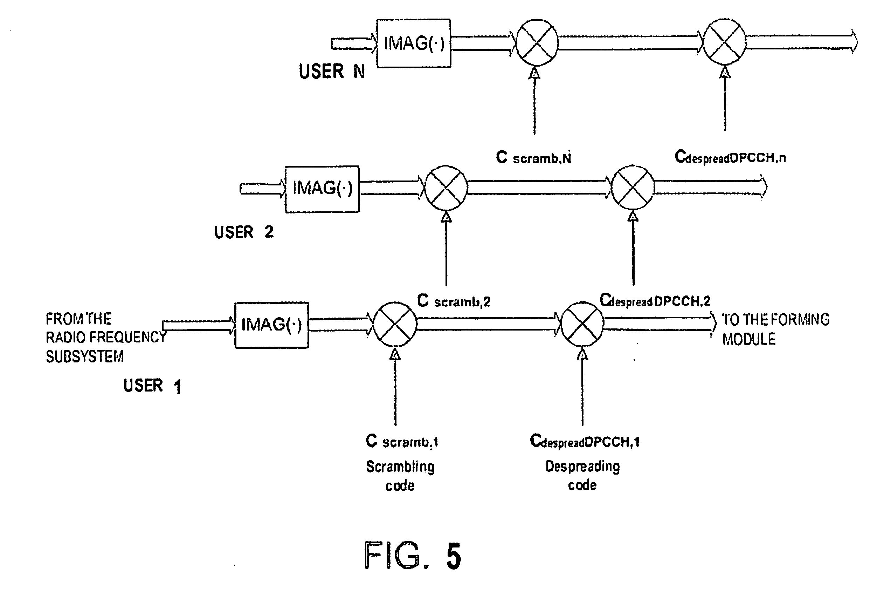

Both the control signal the data signal of the dedicated channels (DPCCH and DPDCH) are demodulated and decoded. This allows separating the dedicated channels from the other channels and separating the users, the signal of each user being obtained separately, so that such signal can be multiplied by the weights resulting from the weight calculation process (20) in the downlink (B). The execution scheme is shown in Figure 5, where it can be seen how the imaginary part (IMAG) of the signal of each user from the radio frequency subsystem is multiplied by the spreading and despreading codes.

• Modulation (19a, 19b, 19c, 19d):

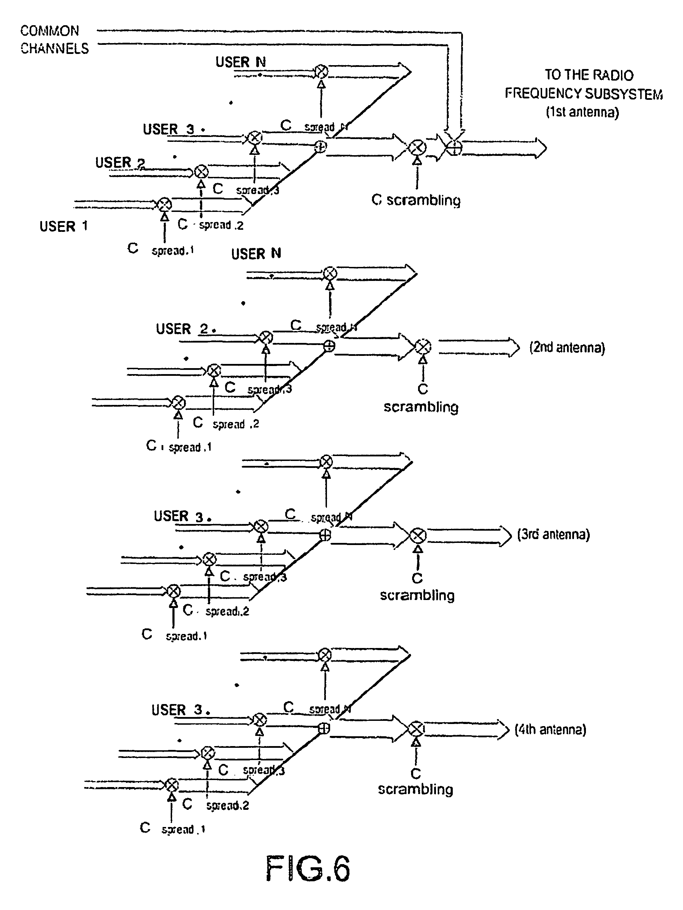

This is applied to the signal of each user, both to the control signal and to the data signal of the dedicated channels (DPCCH and DPDCH), as well as for each of the (four) radio frequency channels set up by the respective elements of the antenna array (1). The multiplication is done by the spreading code. The execution scheme of each of said modules is shown in Figure 6, where it can be seen how the dedicated channels of the signal of each user are multiplied by the spreading and scrambling codes, then adding the common channels to send the set to the radio frequency subsystem in the signals corresponding to each element of the antenna array (1).

Once the signal has been multiplied, the corresponding weights which are obtained in the weight calculation (20) for the downlink (B) will be applied before being sent to the corresponding radiating element of the antenna array (1).

• Weight calculation in the downlink (20):

It calculates the weights from the weights obtained in the weight calculation process (9) in the uplink (A), which weights will be applied to the signals provided to each radiating element of the antenna array (1), through the radio frequency module to transmit (3') in the downlink (B).

In this preferred embodiment of the method, no correction according to the frequency of the weights in the downlink (B) is made since the frequencies are very close to the frequencies of the uplink (A) and therefore, the weights for both links, in respective weight calculation processes (8) and (20), are virtually identical in magnitude.

Ideally, if the hardware means where the method will be executed did not introduce coupling effects, further corrections would not be necessary. However, in practice due to the coupling effect produced by the hardware, the weights are corrected by the product of the inverse coupling matrix of the uplink (A) by the direct coupling matrix of the downlink (B), to compensate the coupling introduced by the radio frequency subsystem.

Before passing to said radio frequency subsystem to transmit (3') the signal, the necessary power correction is applied by means of the of power balancing process (21) to maintain the control over power from the base station (30), whereby these processes are executed transparently for said base station (30).

• Power balancing (21):

To ensure the correct integration of the adaptive antenna with a base station (30) and since it is the base station (30) that carries out the emission power management, the operation method for the antenna must be transparent for this power control function. For this reason, this process modifies the level of the signal such that the relative power level between each of the received channels in the downlink (B) is maintained constant.

The output levels of the correlators are calibrated in relation to the power of the input signal.

• Beamforming in the Downlink (22):

The beamforming process in the downlink (B) must simply multiply the signal of each user by their corresponding weights, obtained by means of the weight calculation (20), such that the signal of each user is configured to obtaining maximum power under the power balancing (21).

• Treatment of Common Channels (23):

According to the scheme, once the channels from the base station (30) are treated by the radio frequency subsystem to receive (3) the signal in the downlink (B), they are separated into two groups: common and dedicated. No adaptive digital processing operation is carried out on the common channels by the method of the invention, and therefore this process is added in the final step to the radio frequency module to transmit (3') said common channels, thereby being transmitted omnidirectionally to the entire cell.

The common channels are to be sent through one of the radiating element of the antenna array (1). Said channels must be modified in amplitude to maintain the power balancing, modified in phase to compensate the phase variation introduced by the radio frequency transceivers and synchronized with the dedicated channels, adding a temporal delay, as is also shown in Figure 3.

Unlike in the uplink (A), in this case it is of interest for the common channels to transmit omnidirectionally because the timing channel, which requires this feature, is located between them.

However, the remaining processes of the operation method have been carried out on the dedicated channels, demodulating channels and users, calculating the weights and being applied to the signals of each user.

In the treatment of common channels (23), the common channels are to be added to a radiating element of the antenna array (1). Then a temporal delay equal to the processing time of the dedicated channels is also added by means of the temporal process compensation (24) so that all the channels, both common and dedicated, are synchronous in time.

• Temporal Process Compensation (24):

The temporal delay information corresponding to each user is found in the Radio Bearer parameters obtained in the capture/update/release (15). This temporal compensation process (24) updates said delay to compensate the variation introduced by the operation method.

With this temporal process compensation (24), all the users processed by the operation method for the adaptive antenna are transparent in time from the control point (RNC) of the base station (30). Accordingly, the users are not presented as if they were far way due to the delay introduced by all the described processes of the method of the invention.

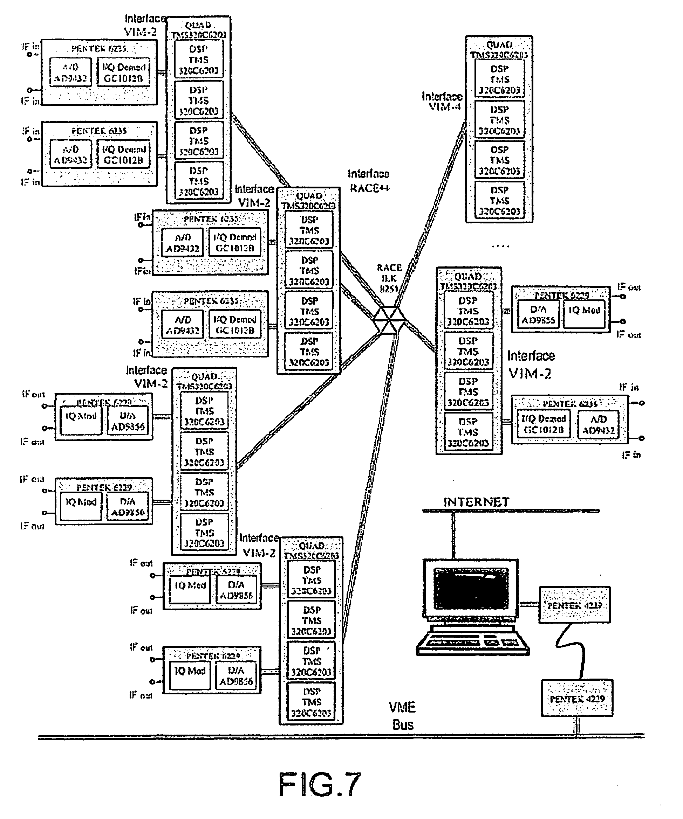

In a preferred embodiment, the plug-in adaptive antenna system is made up of a series of hardware modules, shown in Figure 7, in which the software processes constituting the method of the invention are implemented and function for the uplink (A) and downlink (B).

The implementation of the operation method for the plug-in adaptive antenna in commercial digital signal processors (DSPs) allows carrying out updates and improvements of the adaptive antenna system with great ease, providing significant flexibility to the plug-in antenna.

The selection of the processors has taken into account that the adaptive antenna system must work in real time. Given that the UMTS signal is wideband and works at a high signal rate (3.84 Mcps), the processing capacity for implementing radio software must be very large. To that end, several processors with a great calculation capacity have been used which are of the latest generation in the market and work in parallel.

Fixed-point arithmetic commercial processors have been chosen because this arithmetic allows obtaining a higher calculation speed than the floating-point arithmetic. Specifically, Texas Instruments TMS320C6203 processors, working with a clock at 300 MHz and which allow obtaining up to 2400 million instructions per second (MIPS) are used for the practical implementation. Pentek plates (QUADs) are being used with four of these processors in parallel, in order to obtain a higher calculation speed. Five digital receivers (including analog-to-digital converters) and five digital transmitters (including digital-to-analog converters receiving and transmitting the signals offered by the radio frequency modules are included next to these plates.

Due to the fact of having several processors working in parallel, it is imperative to carry out a task distribution among them, associating the various modules to different QUAD cards and different DSPs therein, attempting to optimize as much as possible the total capacity of the system. The obtained software code was also optimized in order to attempt to make use of the capacity of the processors as much as possible, because a greater capacity allows working with a larger number of users.

Table 1 summarizes the necessary components for an embodiment of the plug-in adaptive antenna system carrying out a cancellation outside the cell for the uplink and a total cancellation for the downlink.

Table 1.

| Components of the plug-in adaptive antenna system |
|---|
| Model 4292-002-005-044-306 Quad C6202 DSP Board with RACEway |
| Model 6235 Dual Wide Band Digital Receiver with FPGA VIM-2 |
| Model 6229 Dual Up Converter VIM-2 |
| Model 8251-008 8 slot ILK Module |
| Model 4229 PCI to VMEbus Adapter |
| Model 8211 12 slot Desktop 500W VME Card Cage |
| Model 4977-100 Code Composer Studio with SwiftNet |
| Model 4999S ReadyFlow Subscription |
| Driver of the card 6235 |
| Driver of the card 6229 |
| Driver of the Quad C6202 DSP 4292-002-005-044-306 |

The selected configuration responds to the solution of the cancellation outside the cell for the uplink and of the total cancellation for the downlink. The scheme for assembling the selected components is shown in Figure 7.

The selected components have been assembled around the high-speed RACEway bus to transfer the information in real time between the input and output of the smart antenna. The possibility of dealing with the total cancellation solution in the uplink includes adding only a larger number of calculation processors, given the stability of the structure.

The features of the hardware elements selected in this architecture are those listed below:

• MODEL 4292-002-005-044-306 QUAD C6202 DSP BOARD WITH RACEWAY: Development system of with an assembly of TMS320C6202 signal processors having the following features:

✓ No. of processors: 4
✓ Processor: TMS320C6202
✓ Processor clock: 250 MHz

✓ SDRAM memory (volatile): 8 Mbyte per processor
✓ FLASH Memory (non-volatile): 1 Mbyte per processor
✓ Global SDRAM memory: 16 Mbyte
✓ Interfaces: VME64, RACE++

- MODEL 6235 DUAL WIDE BAND DIGITAL RECEIVER WITH FPGA VIM-2: Wideband receiver formed by:

    i. Two GC-1012B digital receivers (down converters):

        ✓ Digital converter: Graychip GC1012B
        ✓ Bandwidth: 40 MHz
        ✓ Maximum sampling frequency: 100 MHz
        ✓ Programmable downsampling factor: 2 a 64

    ii. Two AD9432 A/D converters:

        ✓ Analog Device AD9432 Converter
        ✓ Maximum sampling frequency: 100 MHz
        ✓ No. of bits: 12
        ✓ Input power +4 dBm
        ✓ Input impedance: 50 $\Omega$

- MODEL 6229 DUAL UP CONVERTER VIM-2: The upper converter is formed by the AD-9856 D/A upper converter with the following features:

        ✓ Maximum sampling frequency: 200 MHz
        ✓ No. of bits: 12
        ✓ Bandwidth: DC at 80 MHz
        ✓ Maximum output level: 4V peak-peak
        ✓ Output impedance: 75 $\Omega$.

- MODEL 8251-008 8 SLOT ILK MODULE: It forms the backplane of the RACEway bus. It has 8 free slots in the RACEway bus. Said bus does not need any timing element, because one of the cards acts as a master and synchronizes the remaining cards in said bus.
The features of the card controlling said bus are:

        ✓ Number of free slots: 8,
        ✓ Transfer speed: 267 MBytes per second per each slot and up to 2

GBytes per second in the entire bus.

        ✓ Size of the transferred packet: 2 Kbytes in 32-bit words.

- MODEL 4229 PCI TO VMEBUS ADAPTER
This device provides a bridge from the PCI bus for controlling a VME bus. There is a card installed in the personal computer (PC) for the implementation and the other card is installed in the expansion of the VME bus, both cards being connected by a screened cable.
With this device, PC acts as a VME system processor and supports A32 D32 transfers.
- MODEL 8211 12 SLOT DESKTOP 500W VME CARD CAGE: It is the cage where the development system of the smart antenna will be installed. The features thereof are:

        ✓ Case for the rack assembly
        ✓ 12 free slots for 6U x 160mm cards
        ✓ It has a 500 W (12 V) power supply and forced ventilation by means of 3 fans
        ✓ The dimensions are 15.75 x 17.00 x 19.68 inches (height x width x depth)
        ✓ Free are for including an industrial PC.

A scheme of this cage can be seen in Figure 7. The physical position of the cards is open according to the need for the connection with the radio frequency modules.

**Claims**

1.  An operation method for a plug-in adaptive antenna comprising a series of processes for the purpose of being able to connect in radio frequency said adaptive antenna to any standard base station (30), including a beamforming adapted to the users, whose signals are received and transmitted through an antenna array (1), respectively in the uplink (A) and in the downlink (B), **characterized in that** in the beamforming (9) in the uplink (A), the signals received in the antenna array (1) are multiplied by forming weights that are common to all the users and are generated in the weight calculation (8), and the resulting signals are added to produce a single compatible signal to be transmitted in the uplink (A) to the base station (30).

2.  An operation method for a plug-in adaptive antenna according to claim 1, **characterized in that** in the uplink (A), the user signal directions of arrival (10) are estimated and the user location (11) is determined from the estimation of the angular directions and the temporary positions of the users to locate the desired users.

3.  An operation method for a plug-in adaptive antenna according to claims 1 or 2, **characterized in that** in the downlink (B), it uses the same common forming weights obtained in the uplink (A) for the weight calculation (20), correcting them in frequency to multiply them by means of another beamforming (22) in the downlink (B), adding the resulting signals to be transmitted to each user.

4.  An operation method for a plug-in adaptive antenna according to claim 3, **characterized in that** the weights are corrected by means of the coupling matrices of the channels of the uplink (A) and downlink (B).

5.  An operation method for a plug-in adaptive antenna according to any of claims 1 to 4, **characterized in that** said compatible signal is transmitted to a GSM BTS.

6.  An operation method for a plug-in adaptive antenna according to any of claims 1 to 4, **characterized in that** said compatible signal is transmitted to a UMTS Node B.

7.  An operation method for a plug-in adaptive antenna according to claim 6, **characterized in that** in the uplink (A), the weights obtained individually for each user are averaged by means of a known adaptive algorithm for all the users in the weight calculation (8), which weights are weighted by a factor that is inversely proportional to the power of the signal of each user, the forming weights being common for all the users.

8.  An operation method for a plug-in adaptive antenna according to claims 6 or 7, **characterized in that** in the uplink (A), it comprises a phase correction process (7) carries out an average of the phase of the desired user to cancel the average phase variation linked to said desired user.

9.  An operation method for a plug-in adaptive antenna according to claims 6, 7 or 8, **characterized in that** in the downlink (B), it initially comprises user parameter initialization processes (14) and the Radio Bearer parameter capture (15) to obtain the user codes of said base station (30) and the temporal delay of each user for carrying out a temporal process compensation (24), such that said operation method is transparent in time with respect to the base station (30).

10. An operation method for a plug-in adaptive antenna according to claim 9, in the downlink (B), it comprises a power balancing process (21) at the end maintaining the relative power level between each of the dedicated channels received in the signal from the base station (30) constant, and in that it includes a common channel treatment (23) consisting of a power balancing, a phase compensation and a timing with respect to the dedicated channels by means of the temporal process compensation (24), the common channels treated with the signal from the base station (30) subsequently being added, such that said operation method is transparent in the processing of the signal with respect to said base station (30).

11. A plug-in adaptive antenna system, comprising an antenna array (1) for receiving and transmitting the user signals, corresponding radio frequency modules for transmitting (2) and receiving (2') the uplink (A) as well as for the transmitting (3) and receiving (3') the downlink (B), **characterized in that** it comprises weight calculation means (8) in the uplink (A) for generating forming weights that are common to all the users, multiplication means for multiplying the signals received in the antenna array (1) by said forming weights and a beamforming module (9) for adding the resulting signals such that a single compatible signal to be transmitted in the uplink (A) to the base station (30) is produced.

**12.** A plug-in adaptive antenna system according to claim 11, **characterized in that** said base station (30) is a UMTS Node B.

**13.** A plug-in adaptive antenna system according to claim 11, **characterized in that** said base station (30) is a GSM BTS.

**14.** A plug-in adaptive antenna system according to any of claims 11 to 13, **characterized in that** said means are digital processors.

**15.** A plug-in adaptive antenna system according to claim 14, **characterized in that** said digital processors are selected from DSPs, FPGAs and ASICs.


**Patentansprüche**

**1.** Verfahren zum Betreiben einer adaptiven Plug-in-Antenne, das eine Reihe von Prozessen umfasst, die es ermöglichen, die adaptive Antenne in Funkfrequenz mit jeder beliebigen Standard-Basisstation (30) zu verbinden, wobei dies ein Strahlformen einschließt, das an Benutzer angepasst ist, deren Signale über ein Antennen-Array (1) im Uplink (A) bzw. Downlink (B) empfangen und gesendet werden, **dadurch gekennzeichnet, dass** bei dem Strahlformen (9) im Uplink (A) die in dem Antennen-Array (1) empfangenen Signale mit Formungsgewichten multipliziert werden, die allen Benutzern gemeinsam sind und bei der Gewicht-Berechnung (8) erzeugt werden, und die resultierenden Signale addiert werden, um ein einzelnes kompatibles Signal zu erzeugen, das im Uplink (A) zu der Basisstation (30) gesendet wird.

**2.** Verfahren zum Betreiben einer adaptiven Plug-in-Antenne nach Anspruch 1, **dadurch gekennzeichnet, dass** im Uplink (A) die Ankunftsrichtungen (10) der Benutzersignale geschätzt werden und der Standort (11) anhand der Schätzung der Winkelrichtungen und der temporären Positionen der Benutzer bestimmt wird, um die gewünschten Benutzer zu lokalisieren.

**3.** Verfahren zum Betreiben einer adaptiven Plug-in-Antenne nach Anspruch 1 oder 2, **dadurch gekennzeichnet, dass** es im Downlink (B) die gleichen gemeinsamen Formungsgewichte verwendet, die im Uplink (A) für die Gewicht-Berechnung (20) ermittelt werden, sie bezüglich der Frequenz korrigiert, sie mittels einer weiteren Strahlformung (22) im Downlink (B) multipliziert und die resultierenden Ergebnisse addiert, um sie zu jedem Benutzer zu senden.

**4.** Verfahren zum Betreiben einer adaptiven Plug-in-Antenne nach Anspruch 3, **dadurch gekennzeichnet, dass** die Gewichte mittels der Kopplungs-Matrizen der Kanäle des Uplink (A) und Downlink (B) korrigiert werden.

**5.** Verfahren zum Betreiben einer adaptiven Plug-in-Antenne nach einem der Ansprüche 1 bis 4, **dadurch gekennzeichnet, dass** das kompatible Signal zu einer GSM-Funkbasisstation gesendet wird.

**6.** Verfahren zum Betreiben einer adaptiven Plug-in-Antenne nach einem der Ansprüche 1 bis 4, **dadurch gekennzeichnet, dass** das kompatible Signal zu einem UMTS-Knoten B gesendet wird.

**7.** Verfahren zum Betreiben einer adaptiven Plug-in-Antenne nach Anspruch 6, **dadurch gekennzeichnet, dass** im Uplink (A) die für jeden Benutzer individuell ermittelten Gewichte mittels eines bekannten adaptiven Algorithmus für alle Benutzer bei der Gewichte-Berechnung (8) gemittelt werden, wobei die Gewichte mit einem Faktor gewichtet werden, der umgekehrt proportional zur Leistung des Signals jedes Benutzer ist, und die Formungs-Gewichte allen Benutzern gemeinsam sind.

**8.** Verfahren zum Betreiben einer adaptiven Plug-in-Antenne nach den Ansprüchen 6 oder 7, **dadurch gekennzeichnet, dass** es im Uplink (A) einen Phasenkorrekturprozess (7) umfasst, der eine Mittlung der Phase des gewünschten Benutzers durchführt, um die durchschnittliche Phasenvariation aufzuheben, die mit dem gewünschten Benutzer verbunden ist.

9.  Verfahren zum Betreiben einer adaptiven Plup-in-Antenne nach den Ansprüchen 6, 7 oder 8, **dadurch gekennzeichnet, dass** es im Downlink (B) anfänglich Benutzerparameter-Initialisierungsprozesse (14) und die Erfassung (15) von Parametern des Radio Bearer umfasst, um die Benutzer-Codes der Basisstation (30) und die zeitliche Verzögerung jedes Benutzers zu ermitteln, und einen Prozess von Zeitkompensation auszuführen, so dass das Verfahren zum Betreiben in Bezug auf die Basisstation (30) zeitlich transparent ist.

10. Verfahren zum Betreiben einer adaptiven Plug-in-Antenne nach Anspruch 9, das im Downlink (B) einen Leistungs-Ausgleichsprozess (21) an dem Ende umfasst, das den relativen Leistungspegel zwischen jedem der dedizierten Kanäle, die in dem Signal von der Basisstation (30) empfangen werden, konstant hält, und das eine gemeinsame Kanalbehandlung (23) einschließt, die aus einem Leistungsausgleich, einer Phasenkompensation und einer Zeitsteuerung in Bezug auf die dedizierten Kanäle mittels der zeitlichen Prozesskompensation (24) besteht, wobei die mit dem Signal von der Basisstation (30) behandelten gemeinsamen Kanäle anschließend addiert werden, so dass das Verfahren zum Betreiben bezüglich der Verarbeitung des Signals in Bezug auf die Basisstation (30) transparent ist.

11. Adaptives Plug-in-Antennensystem, das ein Antennen-Array (1) zum Empfangen und Senden der Benutzersignale umfasst, die Funkfrequenzmodulen zum Senden (2) und Empfangen (2') des Uplink (A) sowie zum Senden (3) und Empfangen (3') des Downlink (B) entsprechen, **dadurch gekennzeichnet, dass** es eine Gewicht-Berechnungseinrichtung (8) im Uplink (A) zum Erzeugen von Formungs-Gewichten, die allen Benutzern gemeinsam sind, eine Multipliziereinrichtung zum Multiplizieren der in dem Antennen-Array (1) empfangene Signale mit dem Formungs-Gewichten und ein Strahlformungs-Modul (9) zum Addieren der resultierenden Signale umfasst, so dass ein einzelnes kompatibles Signal erzeugt wird, das im Uplink (A) zu der Basisstation (30) zu senden ist.

12. Adaptives Plug-in-Antennensystem nach Anspruch 11, **dadurch gekennzeichnet, dass** die Basisstation (30) ein UMTS Knoten B ist.

13. Adaptives Plug-in-Antennensystem nach Anspruch 11, **dadurch gekennzeichnet, dass** die Basisstation (30) eine GSM-Funkbasisstation ist.

14. Adaptives Plug-in-Antennensystem nach einem der Ansprüche 11 bis 13, **dadurch gekennzeichnet, dass** die Einrichtungen digitale Verarbeitungseinrichtungen sind.

15. Adaptives Plug-in-Antennensystem nach Anspruch 14, **dadurch gekennzeichnet, dass** die digitalen Verarbeitungseinrichtungen aus DSP, FPGA und ASIC ausgewählt werden.

**Revendications**

1.  Procédé de fonctionnement destiné à une antenne adaptive enfichable comprenant une série de processus permettant de relier en termes de fréquence radio ladite antenne adaptive à n'importe quelle station de base standard (30), comprenant une formation de faisceau adaptée aux utilisateurs, dont les signaux sont reçus et transmis par le biais d'un réseau d'antennes (1), respectivement en liaison montante (A) et en liaison descendante (B), **caractérisé en ce que**, lors de la formation de faisceau (9) en liaison montante (A), les signaux reçus sur le réseau d'antennes (1) sont multipliés par des pondérations de formation qui sont communes à l'ensemble des utilisateurs et qui sont générées lors du calcul de pondération (8), et les signaux résultants sont additionnés afin de produire un seul signal compatible devant être transmis en liaison montante (A) à la station de base (30).

2.  Procédé de fonctionnement destiné à une antenne adaptive enfichable selon la revendication 1, **caractérisé en ce que**, en liaison montante (A), les directions d'arrivée (10) des signaux utilisateurs sont estimées, et l'emplacement de l'utilisateur (11) est déterminé à partir de l'estimation des directions angulaires et des positions temporaires des utilisateurs afin de localiser les utilisateurs souhaités.

3.  Procédé de fonctionnement destiné à une antenne adaptive enfichable selon les revendications 1 ou 2, **caractérisé en ce que**, en liaison descendante (B), il utilise les mêmes pondérations de formation communes obtenues en liaison montante (A) pour le calcul de pondération (20), en les corrigeant en termes de fréquence afin de les multiplier à l'aide d'une autre formation de faisceau (22) en liaison descendante (B), et en additionnant les signaux résultants devant être transmis à chaque utilisateur.

**4.** Procédé de fonctionnement destiné à une antenne adaptive enfichable selon la revendication 3, **caractérisé en ce que** les pondérations sont corrigées à l'aide des matrices de couplage des canaux de la liaison montante (A) et de la liaison descendante (B).

**5.** Procédé de fonctionnement destiné à une antenne adaptive enfichable selon l'une quelconque des revendications 1 à 4, **caractérisé en ce que** ledit signal compatible est transmis à une BTS GSM.

**6.** Procédé de fonctionnement destiné à une antenne adaptive enfichable selon l'une quelconque des revendications 1 à 4, **caractérisé en ce que** ledit signal compatible est transmis à un noeud B UMTS.

**7.** Procédé de fonctionnement destiné à une antenne adaptive enfichable selon la revendication 6, **caractérisé en ce que**, en liaison montante (A), les pondérations obtenues individuellement pour chaque utilisateur sont moyennées à l'aide d'un algorithme adaptif connu pour l'ensemble des utilisateurs lors du calcul de pondération (8), lesdites pondérations étant pondérées par un facteur qui est inversement proportionnel à la puissance du signal de chaque utilisateur, les pondérations de formation étant communes pour l'ensemble des utilisateurs.

**8.** Procédé de fonctionnement destiné à une antenne adaptive enfichable selon les revendications 6 ou 7, **caractérisé en ce que**, en liaison montante (A), il comprend un processus de correction de phase (7) qui effectue une moyenne de la phase de l'utilisateur souhaité afin d'annuler la variation de phase moyenne liée audit utilisateur souhaité.

**9.** Procédé de fonctionnement destiné à une antenne adaptive enfichable selon les revendications 6, 7 ou 8, **caractérisé en ce que**, en liaison descendante (B), il comprend initialement des processus d'initialisation de paramètres utilisateur (14) et la capture du paramètre de support radio (15) afin d'obtenir les codes utilisateur de ladite station de base (30) et le retard temporel de chaque utilisateur de façon à effectuer une compensation de processus temporel (24), de telle sorte que ledit procédé de fonctionnement soit transparent en termes de durée par rapport à la station de base (30).

**10.** Procédé de fonctionnement destiné à une antenne adaptive enfichable selon la revendication 9, qui, en liaison descendante (B), comprend un processus d'équilibrage de puissance (21) destiné à maintenir constant le niveau de puissance relative entre chacun des canaux dédiés reçus dans le signal de la part de la station de base (30), et comprend un traitement de canal commun (23) consistant en un équilibrage de puissance, une compensation de phase et une synchronisation par rapport aux canaux dédiés à l'aide de la compensation de processus temporel (24), les canaux communs traités avec le signal provenant de la station de base (30) étant ensuite additionnés, de telle sorte que ledit procédé de fonctionnement soit transparent en termes de traitement du signal par rapport à ladite station de base (30).

**11.** Système d'antennes adaptives enfichables, comprenant un réseau d'antennes (1) destiné à recevoir et à transmettre les signaux utilisateur, des modules de fréquences radio correspondants destinés à transmettre (2) et à recevoir (2') la liaison montante (A) et à transmettre (3) et à recevoir (3') la liaison descendante (B), **caractérisé en ce qu'**il comprend un moyen de calcul de pondération (8) en liaison montante (A), destiné à générer des pondérations de formation qui sont communes à l'ensemble des utilisateurs, un moyen de multiplication destiné à multiplier les signaux reçus sur le réseau d'antennes (1) par lesdites pondérations de formation et un module de formation de faisceau (9) destiné à additionner les signaux résultants de telle sorte qu'un seul signal compatible devant être transmis en liaison montante (A) à la station de base (30) soit produit.

**12.** Système d'antennes adaptives enfichables selon la revendication 11, **caractérisé en ce que** ladite station de base (30) est un noeud B UMTS.

**13.** Système d'antennes adaptives enfichables selon la revendication 11, **caractérisé en ce que** ladite station de base (30) est une BTS GSM.

**14.** Système d'antennes adaptives enfichables selon l'une quelconque des revendications 11 à 13, **caractérisé en ce que** ledit moyen est des processeurs numériques.

**15.** Système d'antennes adaptives enfichables selon la revendication 14, **caractérisé en ce que** lesdits processeurs numériques sont choisis parmi des DSP, des FPGA et des ASIC.

FIG. 1

BLOCK DIAGRAM OF THE UPLINK (A)

FIG.2

EP 1 783 921 B1

GENERAL BLOCK DIAGRAM OF THE DOWNLINK (B)

FIG.3

EP 1 783 921 B1

FIG.4

FIG. 5

**FIG.6**

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2192970